# EUROPÄISCHE PATENTSCHRIFT

(11) **EP 3 819 505 B1**
(45) Veröffentlichungstag und Bekanntmachung des Hinweises auf die Patenterteilung: **09.03.2022**
(21) Anmeldenummer: 20204392.3
(22) Anmeldetag: 28.10.2020
(51) Int. Cl.: F16B 37/08

(54) **SCHNELLSPANNMUTTER UND HERSTELLVERFAHREN FÜR EINE SCHNELLSPANNMUTTER**
QUICK CHANGE CHUCK AND METHOD FOR THE PRODUCTION OF SAME
ÉCROU À SERRAGE RAPIDE ET PROCÉDÉ DE FABRICATION POUR UN ÉCROU À SERRAGE RAPIDE

(30) Priorität: 05.11.2019 DE 102019217011
(43) Veröffentlichungstag der Anmeldung: 12.05.2021
(73) Patentinhaber: ICG GmbH & Co. KG, 72172 Sulz am Neckar (DE)
(72) Erfinder: Haug, André, 72296 Schopfloch-Oberiflingen (DE)
(74) Vertreter: Kohler Schmid Möbus Patentanwälte

(56) Entgegenhaltungen:
- WO-A1-2008/105045
- DE-C1- 10 064 530
- US-A1- 2007 243 046

## Beschreibung

Die Erfindung betrifft eine Schnellspannmutter mit einem sich entlang einer Gewindeachse der Schnellspannmutter erstreckenden ersten Gewindeabschnitt und mit einem zweiten Gewindeabschnitt, wobei der erste und der zweite Gewindeabschnitt in einem Befestigungszustand der Schnellspannmutter in Eingriff mit einem sich entlang der Gewindeachse erstreckenden Außengewinde bringbar sind und in einem Verschiebezustand der Schnellspannmutter außer Eingriff mit dem Außengewinde bringbar sind, so dass die Schnellspannmutter über das Außengewinde verschieblich ist, und wobei der erste Gewindeabschnitt an einem in Umfangsrichtung umlaufend geschlossenen Mutternkörper der Schnellspannmutter ausgebildet ist.

Eine solche Schnellspannmutter ist aus dem Datenblatt "06030 Rändelmuttern mit Schnellspannfunktion" der norelem Normelemente KG, abgerufen unter https://www.norelem.de/de/de/Produkte/Produkt%C3%BCbersicht/Flexibles-Normteilesystem/Bedienteile/Griffe-Kn%C3%B6pfe/R%C3%A4ndelmuttern-mit-Schnellspannfunktion.html am 30.8.2019 bekannt.

Schnellspannmuttern werden eingesetzt, wenn vor dem Verspannen eines Bauteils die Mutter über eine längere Strecke eines Außengewindes zu dem Bauteil hin verbracht werden muss. Typischerweise sind hierzu Gewindeabschnitte der Schnellspannmutter außer Eingriff mit dem Außengewinde bringbar, auch wenn die Schnellspannmutter das Außengewinde umgreifend angeordnet ist. In Sonderfällen ist die Schnellspannmutter für ein Aufsetzen in radialer Richtung auf das Außengewinde ausgebildet. Zum Verspannen des Bauteils werden die Gewindeabschnitte in Eingriff mit dem Außengewinde gebracht, sodass die Schnellspannmutter in der gewohnten Weise angezogen werden kann.

Die oben erwähnte, vorbekannte Schnellspannmutter weist einen Mutternkörper mit einer Anlagefläche zur Anlage an einem Bauteil auf. Angrenzend an die Anlagefläche ist ein erster Gewindeabschnitt ausgebildet. Von der Anlagefläche aus gesehen oberhalb des ersten Gewindeabschnitts ist ein zweiter Gewindeabschnitt ausgebildet, welcher dem ersten Gewindeabschnitt in einer radialen Richtung gegenüberliegt. Eine in dem Mutternkörper schräg zur durch die Gewindeabschnitte definierten Gewindeachse verlaufende Bohrung erlaubt ein Verkippen der Schnellspannmutter gegenüber einem Bolzen bzw. einer Schraube mit einem korrespondierenden Außengewinde, sodass die Gewindeabschnitte der Schnellspannmutter außer Eingriff mit dem Außengewinde gebracht werden können. Die Anlagefläche ist senkrecht zu der durch die Gewindeabschnitte definierten Gewindeachse ausgerichtet. Für die zuverlässige Funktion der bekannten Schnellspannmutter muss ein zu verspannendes Bauteil eine senkrecht zu dem Außengewinde verlaufende Auflagefläche aufweisen. Wenn dies der Fall ist, werden durch die Anlage der Anlagefläche der Schnellspannmutter an der Auflagefläche des Bauteils beim Anziehen der Schnellspannmutter deren Gewindeabschnitte in Eingriff mit dem Außengewinde gebracht und gehalten.

Aus dem Katalog "MECHANISCHE SPANNELEMENTE AMF" für das Jahr 2019 der ANDREAS MAIER GmbH & Co. KG, abgerufen von https://www.amf.de/de/aktuelles/produktkataloge-und-aktionen.html am 30.8.2019, ist eine Schnellspannmutter bekannt, bei der zwei Halbschalen, die jeweils einen Gewindeabschnitt aufweisen, um eine quer zu einer Gewindeachse verlaufende Schwenkachse gegeneinander verschwenkbar sind. Durch Aufschwenken der Halbschalen können die Gewindeabschnitte außer Eingriff mit einem Außengewinde gebracht werden; durch Zusammenführen der Halbschalen können die Gewindeabschnitte in Eingriff mit dem Außengewinde gebracht werden. Da bei dieser Schnellspannmutter eine Anlagefläche zur Anlage an einem zu verspannenden Bauteil durch die beiden Halbschalen gebildet ist, ist es bei dieser Schnellspannmutter erforderlich, dass das Bauteil eine durchgängige und plane Auflagefläche aufweist, die sich senkrecht zu dem Außengewinde erstreckt. Durch die komplexe Führung der Halbschalen aneinander ist diese Schnellspannmutter zudem sehr aufwendig zu fertigen und entsprechend teuer in der Herstellung.

Aus dem zuvor genannten Katalog ist eine weitere Schnellspannmutter bekannt, welche zwei entlang einer Gewindeachse übereinanderliegend angeordnete Mutternteile aufweist. Die beiden Mutternteile weisen jeweils eine einseitig offene, U-förmige Ausnehmung auf, welche an ihrem geschlossenen Ende einen Gewindeabschnitt trägt. Die Mutternteile sind derart aneinander geführt, dass sie um die Gewindeachse gegeneinander drehbar sind. Um die Schnellspannmutter in radialer Richtung auf ein Außengewinde aufzusetzen, werden die Mutternteile so gedreht, dass die Öffnungen der U-förmigen Ausnehmungen übereinander liegen. Zum Befestigen werden die Mutternteile gegeneinander gedreht, sodass die Schnellspannmutter an dem Außengewinde gehalten ist. Die Montage und insbesondere das Festziehen diese Schnellspannmutter ist daher aufwendig.

Aus der DE 100 64 530 C1 ist ein Schnellspanngewinde bekannt, bestehend aus einem Hülsenteil und einem mit dem Hülsenteil in einer Grundraststellung verrastbaren Spangenteil.

### Aufgabe der Erfindung

Es ist Aufgabe der Erfindung, eine flexibel einsetzbare Schnellspannmutter für eine einfache und zuverlässige Befestigung anzugeben.

### Beschreibung der Erfindung

Diese Aufgabe wird erfindungsgemäß gelöst durch eine Schnellspannmutter gemäß Anspruch 1. In den Rahmen der Erfindung fällt ferner ein Herstellverfahren für eine Schnellspannmutter gemäß Anspruch 13.

### Erfindungsgemäße Schnellspannmutter

Erfindungsgemäß ist eine Schnellspannmutter vorgesehen mit einem sich entlang einer Gewindeachse der Schnellspannmutter erstreckenden ersten Gewindeabschnitt und mit einem zweiten Gewindeabschnitt, wobei der erste und der zweite Gewindeabschnitt in einem Befestigungszustand der Schnellspannmutter in Eingriff mit einem sich entlang der Gewindeachse erstreckenden Außengewinde bringbar sind und in einem Verschiebezustand der Schnellspannmutter außer Eingriff mit dem Außengewinde bringbar sind, so dass die Schnellspannmutter über das Außengewinde verschieblich ist, und wobei der erste Gewindeabschnitt an einem in Umfangsrichtung umlaufend geschlossenen Mutternkörper der Schnellspannmutter ausgebildet ist, die dadurch gekennzeichnet ist, dass der zweite Gewindeabschnitt an einem Mutterneinsatz der Schnellspannmutter ausgebildet ist, der in einer Kulisse des Mutternkörpers verschieblich geführt ist.

Ein Verschieben der Schnellspannmutter im Verschiebezustand über das Außengewinde kann besonders einfach ohne ein Drehen der Schnellspannmutter erfolgen. Auch beim Verschieben der Schnellspannmutter im Verschiebezustand kann die Schnellspannmutter das Außengewinde in Umfangsrichtung umgreifen.

Wenn der erste und der zweite Gewindeabschnitt im Befestigungszustand in Eingriff mit dem Außengewinde gebracht sind, kann die Schnellspannmutter wie eine normale Mutter zum Verspannen von Bauteilen verwendet werden, indem die Schnellspannmutter gegenüber dem Außengewinde gedreht wird. Das Außengewinde, mit dem die Schnellspannmutter zusammenwirken kann, ist typischerweise an einer Schraube oder einem Bolzen, insbesondere einem Stehbolzen, ausgebildet.

Durch den in Umfangsrichtung umlaufend geschlossenen Mutternkörper kann eine besonders große Stabilität bzw. Belastbarkeit der Schnellspannmutter erreicht werden. Vorzugsweise weist der Mutternkörper eine in Umfangsrichtung umlaufend geschlossene Anlagefläche zur Anlage an einem Bauteil auf. Der erste Gewindeabschnitt ist an dem Mutternkörper ausgebildet und erstreckt sich entlang der Gewindeachse. Die Gewindeachse ist mit anderen Worten durch den ersten Gewindeabschnitt definiert. Für die Beschreibung der vorliegenden Erfindung beziehen sich Richtungsangaben, wie beispielsweise radial oder axial, auf die Gewindeachse.

Die Führung des Mutterneinsatzes an dem Mutternkörper mittels der Kulisse erlaubt es, den Befestigungszustand bzw. den Verschiebezustand auf einfache und definierte Weise einzurichten, indem der Mutterneinsatz entlang seiner Führung verschoben wird. Dies kann dazu beitragen, die Bedienung der Schnellspannmutter zu vereinfachen und Fehlbedienungen, insbesondere ein unsauberes Einrichten des Befestigungszustandes, zu vermeiden.

Durch die Führung des Mutterneinsatzes in der Kulisse des Mutternkörpers kann zudem erreicht werden, dass die beiden Gewindeabschnitte im Befestigungszustand auf eine vorgegebene (vordefinierte) Weise zueinander ausgerichtet sind. Dies trägt dazu bei, dass die Schnellspannmutter unempfindlich gegenüber Form- und/oder Lageabweichungen einer Auflagefläche eines zu verspannen Bauteils ist, insbesondere wenn die Schnellspannmutter eine umlaufend geschlossene Anlagefläche aufweist. Die Schnellspannmutter kann insbesondere zum Befestigen bzw. Verspannen eines Bauteils verwendet werden, dessen Auflagefläche nicht plan (nicht eben) oder nicht senkrecht zur Gewindeachse ausgerichtet ist.

Die Gewindeabschnitte (und das Außengewinde) sind vorzugsweise als Spitzgewinde, insbesondere metrisches ISO-Gewinde oder Whitworth-Gewinde ausgebildet. Das Außengewinde ist korrespondierend zu den Gewindeabschnitten der Schnellspannmutter ausgebildet, insbesondere hinsichtlich Gewindetyp und Durchmesser.

Die beiden Gewindeabschnitte erstrecken sich in Umfangsrichtung grundsätzlich jeweils über höchstens 180°. Dies ermöglicht es, die Gewindeabschnitte zum Einrichten des Verschiebezustands in einfacher Weise außer Eingriff mit dem Außengewinde zu bringen, indem sie in radialer Richtung von dem Außengewinde entfernt werden. Typischerweise erstreckt sich der erste Gewindeabschnitt in Umfangsrichtung über wenigstens 120°, vorzugsweise wenigstens 150°. Dies ist im Hinblick auf die Belastbarkeit der Schnellspannmutter vorteilhaft. Der zweite Gewindeabschnitt kann sich in Umfangrichtung über wenigstens 50°, vorzugsweise wenigstens 70°, und/oder höchstens 120°, insbesondere höchstens 100° erstrecken. Dadurch kann der Mutterneinsatz einerseits ausreichend stabil ausgeführt werden. Andererseits kann der Mutterneinsatz hinreichend klein bleiben, um den Mutternkörper durch die Kulisse zur Führung des Mutterneinsatzes nicht übermäßig zu schwächen.

Die beiden Gewindeabschnitte sind typischerweise einander in einer radialen Richtung gegenüberliegend angeordnet. Die Gewindeabschnitte sind vorzugsweise entlang der Gewindeachse überlappend angeordnet. Insbesondere können die Gewindeabschnitte (zumindest im Befestigungszustand) dieselben Bereiche entlang der Gewindeachse überdecken. Die beiden Gewindeabschnitte können mit anderen Worten auf gleicher Höhe bezüglich der Gewindeachse angeordnet sein. Die vorgenannten Anordnungen der beiden Gewindeabschnitte relativ zueinander tragen dazu bei, ein Verkippen der Schnellspannmutter gegenüber dem Außengewinde zu vermeiden, insbesondere auch wenn die Schnellspannmutter exzentrisch belastet wird, etwa durch eine unebene oder schräg zur Gewindeachse ausgerichtete Auflagefläche eines Bauteils.

Der Mutternkörper ist typischerweise in axialer Richtung abschnittsweise in Umfangsrichtung umlaufend geschlossen ausgebildet. Der Mutternkörper kann mit anderen Worten einen oder typischerweise mehrere in Umfangsrichtung umlaufend geschlossene Axialabschnitte aufweisen. Der Mutternkörper kann insbesondere von einer Kulissenöffnung durchbrochen sein.

Der Mutternkörper und der Mutterneinsatz sind üblicherweise zwei separate Bauteile. In Sonderfällen, etwa bei Schnellspannmuttern aus Kunststoff, können der Mutternkörper und der Mutterneinsatz stoffschlüssig, beispielsweise über ein Filmscharnier, miteinander verbunden sein.

Der Mutterneinsatz ist in der Kulisse typischerweise rein translatorisch relativ zu dem Mutternkörper beweglich. Die Führung des Mutterneinsatzes in der Kulisse des Mutternkörpers verhindert dann mit anderen Worten rotatorische Bewegungen des Mutterneinsatzes gegenüber dem Mutternkörper. Dies ist im Hinblick auf den Eingriff des zweiten Gewindeabschnitts in das Außengewinde im Befestigungszustand sowie das Einrichten bzw. Aufheben des Eingriffs des zweiten Gewindeabschnitts in das Außengewinde vorteilhaft.

Eine Anlagefläche der Schnellspannmutter ist vorzugsweise senkrecht zu der Gewindeachse ausgerichtet. Die Anlagefläche dient zur Anlage der Schnellspannmutter an einem zu verspannenden Bauteil. Besonders bevorzugt ist die Anlagefläche in Umfangsrichtung umlaufend geschlossen ausgebildet. Die Anlagefläche bildet dann einen in Umfangsrichtung geschlossen umlaufenden Axialabschnitt. Diese Gestaltungen tragen dazu bei, die Unempfindlichkeit der Schnellspannmutter gegenüber Form- bzw. Lageabweichungen einer Auflagefläche eines zu verspannen Bauteils weiter zu erhöhen. Der Mutternkörper kann einen in radialer Richtung auskragenden Bund aufweisen, an dem die Anlagefläche ausgebildet ist. Durch den Bund kann die Größe (Flächenausdehnung) der Anlagefläche erhöht werden. Im Befestigungszustand kann der Mutterneinsatz bündig mit der Anlagefläche abschließen oder hinter die Anlagefläche zurückgesetzt sein.

Bei einer vorteilhaften Ausführungsform ist vorgesehen, dass der Mutterneinsatz entlang einer geradlinig verlaufenden Verschieberichtung in der Kulisse geführt ist. Dies kann das Ein- bzw. Ausrücken des zweiten Gewindeabschnitts in das bzw. aus dem Außengewinde erleichtern. Zudem kann eine geradlinig führende Kulisse rationell gefertigt werden.

Erfindungsgemäß ist die Verschieberichtung gegenüber einer senkrecht zu der Gewindeachse verlaufenden Ebene geneigt ausgerichtet.

Dadurch kann eine Selbsthemmung des Mutterneinsatzes im Befestigungszustand der Schnellspannmutter bei Belastung über das Außengewinde unterstützt bzw. eingerichtet sein. Mit anderen Worten kann bei durch die Wahl einer geeigneten Neigung verhindert werden, dass der Mutterneinsatz durch die Belastung des zweiten Gewindeabschnitts (ungewollt) ausgerückt wird, d. h. die Schnellspannmutter in den Verschiebezustand überführt wird. Bei anderen Ausführungsformen (insbesondere ohne Neigung) kann eine entsprechende Selbsthemmung beispielsweise über die Gestaltung von Reibpaarungen zwischen dem Mutterneinsatz und dem Mutternkörper sowie zwischen dem Mutterneinsatz und dem Außengewinde eingerichtet sein. Die Neigung der Verschieberichtung kann ferner für das Überführen der Schnellspannmutter in den Befestigungszustand vorteilhaft sein. In der senkrecht zur Gewindeachse verlaufenden Ebene kann sich eine Anlagefläche der Schnellspannmutter erstrecken. Die Schnellspannmutter weist bei dieser Ausführungsform grundsätzlich eine einzige Anlagefläche auf; Schnellspannmutter ist mit anderen Worten richtungsabhängig ausgebildet. Bei der Verwendung der Schnellspannmutter ist darauf zu achten, dass die Anlagefläche zu dem zu befestigen Bauteil hin orientiert ist.

Bei einer besonders bevorzugten Weiterentwicklung ist vorgesehen, dass benachbarte Flanken der Gewindeabschnitte jeweils einen Flankenwinkel einschließen, und dass die Verschieberichtung mit der senkrecht zu der Gewindeachse verlaufenden Ebene einen Führungswinkel einschließt, der der Hälfte des Flankenwinkels entspricht. Dadurch kann erreicht werden, dass sich beim Anziehen der Schnellspannmutter die vom Außengewinde auf den Mutterneinsatz ausrückend wirkende und die vom Mutternkörper auf den Mutterneinsatz einrückend wirkende Kraftkomponenten zumindest näherungsweise aufheben. Mithin kann zuverlässig vermieden werden, dass der zweite Gewindeabschnitt am Mutterneinsatz bei Belastung der Schnellspannmutter ungewollt außer Eingriff mit dem Außengewinde kommt. Ferner kann dies ein Eingleiten des zweiten Gewindeabschnitts am Mutterneinsatz in das Außengewinde beim Verbringen des Mutterneinsatzes in den Befestigungszustand erleichtern.

Wenn der Mutterneinsatz geradlinig in der Kulisse geführt ist kann vorgesehen sein, dass die Verschieberichtung des Mutterneinsatzes in einer die Gewindeachse enthaltenden Ebene liegt. Die Verschieberichtung beschreibt dabei grundsätzlich die Bewegbarkeit eines in Umfangsrichtung mittig am Mutterneinsatz gelegenen Punktes, typischerweise eines Schwerpunktes des Mutterneinsatzes. Ein Anziehen bzw. Lösen der Schnellspannmutter bewirkt bei dieser Weiterbildung keine Kraftwirkung auf den Mutterneinsatz, die diesen zu dem Außengewinde (bzw. der Gewindeachse) hin einrückt oder von dem Außengewinde weg ausrückt. Insbesondere bleibt mithin beim Anziehen bzw. Lösen der Schnellspannmutter der (bereits vorliegende) Befestigungszustand eingerichtet.

Alternativ kann die Verschieberichtung für ein verstärktes Hereinziehen des Mutterneinsatzes beim Anziehen der Schnellspannmutter in einer gegenüber einer die Gewindeachse enthaltenden Ebene - bei Betrachtung von radial innen nach radial außen - in Anzugsrichtung der Schnellspannmutter geneigten Ebene liegen. Dadurch kann zugleich erreicht werden, dass der Mutterneinsatz beim Lösen der Schnellspannmutter nach außen ausgerückt wird, sodass beim Lösen der Verschiebezustand selbsttätig eingerichtet wird.

Eine bevorzugte Ausführungsform der Schnellspannmutter ist dadurch gekennzeichnet, dass der Mutternkörper von wenigstens einer Kulissenöffnung der Kulisse durchbrochen ist, und dass der Mutterneinsatz in die Kulissenöffnung eingreift. Dies stellt eine einfache, zuverlässige und präzise Möglichkeit dar, den Mutterneinsatz an dem Mutternkörper zu führen. Die Kulissenöffnung ist grundsätzlich umlaufend von dem Mutternkörper umschlossen.

Bei einer vorteilhaften Weiterbildung dieser Ausführungsform ist vorgesehen, dass der Mutterneinsatz wenigstens einen Fortsatz aufweist, der die Kulissenöffnung im Mutternkörper durchragt, vorzugsweise zwei Fortsätze aufweist, die jeweils eine Kulissenöffnung durchragen. Über den Fortsatz kann der Mutterneinsatz von außen zur Gewindeachse hin verschoben werden, d. h. die Schnellspannmutter in den Befestigungszustand überführt werden. Ferner kann durch den Fortsatz die Führung des Mutterneinsatzes in der Kulissenöffnung bewirkt sein. Wenn mehr als eine Kulissenöffnung ausgebildet ist, sind die Kulissenöffnungen typischerweise jeweils durch einen Steg der Kulisse voneinander getrennt. Zwei oder mehr Fortsätze sind vorzugsweise entlang der Gewindeachse übereinanderliegend angeordnet.

Eine vorteilhafte Weiterbildung einer Schnellspannmutter mit geradlinig geführtem Mutterneinsatz, der mit einem Fortsatz eine Kulissenöffnung durchragt ist dadurch gekennzeichnet, dass die Kulissenöffnung zu einer Anlagefläche der Schnellspannmutter hin von einer parallel zu der Verschieberichtung des Mutterneinsatzes ausgerichteten Führungsfläche begrenzt ist. Die Anlagefläche ist diejenige, typischerweise quer zur Gewindeachse verlaufende, Seite der Schnellspannmutter, welche zur Anlage an einem Bauteil vorgesehen ist. Der Mutterneinsatz kann sich beim Festziehen der Schnellspannmutter bzw. im festgezogenen Zustand der Schnellspannmutter an der Führungsfläche abstützen. Auf diese Weise kann ein Kraftfluss ausgehend von der Führungsfläche durch den Mutterneinsatz zu dem Außengewinde hin eingerichtet sein. Der Mutterneinsatz weist typischerweise eine zu der Führungsfläche korrespondierende Gegenkontur, insbesondere an einem Fortsatz, auf. Auch von der Anlagefläche abgewandt kann die Kulissenöffnung von einer weiteren, parallel zu der Verschieberichtung des Mutterneinsatzes ausgerichteten Führungsfläche begrenzt sein. Der Mutterneinsatz kann dann eine weitere korrespondierende Gegenkontur, insbesondere an einem Fortsatz aufweisen. Die weitere Führungsfläche und gegebenenfalls die weitere Gegenkontur können eine präzisere Führung des Mutterneinsatzes in der Kulisse bewirken.

Bei einer besonders bevorzugten Ausführungsform der Schnellspannmutter ist vorgesehen, dass der Mutterneinsatz im Befestigungszustand eine Schlüsselfläche der Schnellspannmutter mit ausbildet. Durch Ansetzen eines Werkzeugs, insbesondere eines Gabel- oder Ringschlüssels, an dieser Schlüsselfläche kann der Mutterneinsatz zu der Gewindeachse hin verschoben werden, sodass der Befestigungszustand eingerichtet wird. Es kann mit anderen Worten durch das Ansetzen des Werkzeugs zum Anziehen der Schnellspannmutter automatisch der Befestigungszustand eingerichtet werden. Insbesondere kann die Schnellspannmutter mittels des Werkzeugs über die (von dem Mutterneinsatz und dem Mutternkörper) gemeinsam ausgebildete Schlüsselfläche nur angezogen werden, wenn der Befestigungszustand eingerichtet ist. Dies vereinfacht die Verwendung der Schnellspannmutter und hilft Fehlbedienungen, insbesondere ein unvollständiges bzw. unsauberes Einrichten des Befestigungszustandes, zu vermeiden. Im Verschiebezustand ragt der Mutterneinsatz typischerweise über einen durch den Mutternkörper ausgebildeten Bereich der Schlüsselfläche nach außen, insbesondere radial außen, vor. Die Schlüsselfläche ist vorzugsweise durch eine Stirnfläche eines Fortsatzes des Mutterneinsatzes mit ausgebildet. Die Schlüsselfläche kann Teil eines Außenmehrkants, insbesondere eines Außensechskants, sein. Weitere Schlüsselflächen der Schnellspannmutter können von dem Mutternkörper alleine ausgebildet sein.

Vorzugsweise ist vorgesehen, dass ein in radialer Richtung zu der Gewindeachse gemessener Verfahrweg des Mutterneinsatzes mehr als das Doppelte einer Gewindetiefe der Gewindeabschnitte beträgt. Um den Verschiebezustand einzurichten ist dann insbesondere kein Verkippen der Schnellspannmutter notwendig. Auch können dadurch die Gewindeabschnitte auf gleicher Höhe bezüglich der Gewindeachse angeordnet sein.

Eine vorteilhafte Ausführungsform der Schnellspannmutter ist dadurch gekennzeichnet, dass der Mutternkörper eine parallel zur Gewindeachse verlaufende Durchgangsbohrung aufweist, deren Durchmesser wenigstens dem Gewindenenndurchmesser der Gewindeabschnitte entspricht und deren Bohrungsachse gegenüber der Gewindeachse, vorzugsweise um den Betrag einer Gewindetiefe des ersten Gewindeabschnitts, von dem ersten Gewindeabschnitt weg angeordnet ist. Eine solche Schnellspannmutter kann einfach gefertigt werden. Zudem kann über den Durchmesser der Durchgangsbohrung die Erstreckung des ersten Gewindeabschnitts in Umfangsrichtung eingestellt werden. Der Gewindenenndurchmesser entspricht typischerweise einem Außendurchmesser des Außengewindes. Wenn der Durchmesser der Durchgangsbohrung größer ist als der Gewindenenndurchmesser, kann der Versatz der Bohrungsachse und der Gewindeachse um die Hälfte der Durchmesserdifferenz größer sein als die Gewindetiefe.

Vorzugsweise sind der erste und/oder der zweite Gewindeabschnitt entlang der Gewindeachse über die Höhe des Mutternkörpers bzw. des Muttereinsatzes durchgehend ausgebildet. Die Gewindeabschnitte weisen mit anderen Worten mehrere in axialer Richtung unmittelbar aufeinanderfolgende Teilgewindegänge auf und erstrecken sich im Wesentlichen (abgesehen von Fasen an den Gewindeanfängen und ggf. etwas axialem Versatz des Mutterneinsatzes gegenüber dem Mutternkörper) von einer Anlagefläche bis zu einer der Anlagefläche abgewandten Stirnseite der Schnellspannmutter. Die durchgehenden Gewindeabschnitte können die Belastbarkeit der Schnellspannmutter verbessern. Zudem wirken die durchgehenden Gewindeabschnitte einem Verkippen der Schnellspannmutter gegenüber dem Außengewinde bei exzentrischer Belastung der Schnellspannmutter entgegen.

Bei einer besonders vorteilhaften Ausführungsform der Schnellspannmutter ist vorgesehen, dass der Mutterneinsatz unverlierbar an dem Mutternkörper gehalten ist. Dies vereinfacht die Handhabung der Schnellspannmutter in der Praxis erheblich. Um den Mutterneinsatz unverlierbar am Mutternkörper zu sichern, kann nach dem Einsetzen des Mutterneinsatzes in die Kulisse des Mutternkörpers beispielsweise ein Fortsatz des Mutterneinsatzes plastisch verformt, insbesondere aufgeweitet, werden.

Bei einer bevorzugten Ausführungsform der Schnellspannmutter sind der Mutternkörper und/oder der Mutterneinsatz (jeweils) als ein Metallspritzgussteil, insbesondere aus einem Stahlwerkstoff, ausgebildet. Dies erlaubt eine rationelle Fertigung der Schnellspannmutter. Zudem können mittels Metallspritzguss sehr stabile Schnellspannmuttern erhalten werden. Die Metallspritzgussteile können, insbesondere spanend, nachbearbeitet sein. Insbesondere können die Gewindeabschnitte nach dem Spritzgießen in den Mutternkörper bzw. den Mutterneinsatz eingebracht worden sein, beispielsweise durch ein Umformverfahren oder durch ein spanendes Verfahren, etwa Gewindeschneiden oder Gewindefräsen.

### Erfindungsgemäßes Herstellverfahren

In den Rahmen der vorliegenden Erfindung fällt ferner ein Verfahren zum Herstellen einer oben beschriebenen, erfindungsgemäßen Schnellspannmutter, bei welcher der Mutterneinsatz im Befestigungszustand eine Schlüsselfläche der Schnellspannmutter mit ausbildet. Das Verfahren umfasst die Schritte
a) Bereitstellen eines Mutterneinsatz-Rohlings und Bereitstellen eines Mutternkörper-Rohlings, der eine Durchgangsbohrung und eine Kulisse zur Führung des Mutterneinsatz-Rohlings aufweist,
b) Einsetzen des Mutterneinsatz-Rohlings in die Kulisse des Mutternkörper-Rohlings
c) Einspannen der erhaltenen Anordnung von Mutterneinsatz-Rohling und Mutternkörper-Rohling über die von dem Mutterneinsatz-Rohling mit ausgebildete Schlüsselfläche und eine gegenüberliegende Schlüsselfläche an dem Mutternkörper-Rohling,
d) gemeinsames Fertigen des ersten und des zweiten Gewindeabschnitts.

Durch dieses Verfahren kann zuverlässig und auf einfache Weise erreicht werden, dass der zweite Gewindeabschnitt sich in der gewünschten Position relativ zur Gewindeachse befindet, wenn der Mutterneinsatz durch Ansetzen eines Werkzeugs an der durch den Mutterneinsatz und den Mutternkörper gemeinsam ausgebildeten Schlüsselfläche ausgerichtet ist. Fertigungstoleranzen bei der Herstellung der Rohlinge können durch dieses Verfahren kompensiert werden. Beim gemeinsamen Fertigen der beiden Gewindeabschnitte wird der Mutterneinsatz typischerweise durch ein hierzu eingesetztes Gewindewerkzeug von der Gewindeachse weg gegen die Einspannung an der gemeinsam ausgebildeten Schlüsselfläche gepresst. Durch das gemeinsame Fertigen des ersten und des zweiten Gewindeabschnitts bei definiert ausgerichtetem Mutterneinsatz kann ferner erreicht werden, dass die Schnellspannmutter auf dem Außengewinde weder übermäßiges Spiel aufweist noch klemmt. Dies ist im Hinblick auf die Betätigung der Schnellspannmutter und deren Belastbarkeit vorteilhaft.

Bei einer vorteilhaften Verfahrensvariante ist vorgesehen, dass im Schritt c) ein Führungsstift in die Durchgangsbohrung eingesetzt wird, und dass im Schritt d) der Führungsstift zumindest zu Beginn des gemeinsamen Fertigens der Gewindeabschnitte die Position des Mutterneinsatzes bzw. Mutterneinsatz-Rohlings definiert. Durch den Führungsstift kann vermieden werden, dass sich der Mutterneinsatz ungewollt zur Gewindeachse hin verschiebt. Der Führungsstift sichert mit anderen Worten die Position des Mutterneinsatzes. Dies ist insbesondere zu Beginn der Durchführung von Schritt d) vorteilhaft, wenn das Gewindewerkzeug noch nicht weit in die Durchgangsbohrung vorgedrungen ist und den Mutterneinsatz daher noch nicht zuverlässig von der Gewindeachse weg drücken kann. Ein Durchmesser des Führungsstifts entspricht typischerweise dem Kerndurchmesser des den Gewindeabschnitten zugeordneten Außengewindes oder ist geringfügig kleiner, etwa bis zu 10 % kleiner, als der Kerndurchmesser.

Vorzugsweise wird der Führungsstift mit dem Fortschritt des Fertigens der Gewindeabschnitte zunehmend aus der Durchgangsbohrung entfernt. Dadurch kann erreicht werden, dass der Mutterneinsatz während des gesamten Fertigungsschritts d) über seine gesamte Länge entlang der Gewindeachse geführt und positioniert ist. Der Führungsstift kann aktiv aus der Durchgangsbohrung herausgezogen werden. Alternativ kann der Führungsstift durch ein Gewindewerkzeug aus der Durchgangsbohrung verdrängt werden. Der Führungsstift kann hierzu federnd in die Durchgangsbohrung hinein vorgespannt sein.

Eine vorteilhafte Verfahrensvariante ist dadurch gekennzeichnet, dass die Gewindeabschnitte durch Eindrehen eines Gewindewerkzeugs von einer einer Anlagefläche der Schnellspannmutter abgewandten Stirnseite der Schnellspannmutter her gefertigt werden. Es hat sich gezeigt, dass dadurch ein unvermeidliches Spiel des Mutterneinsatzes in der Kulisse in einer für die Funktion der Schnellspannmutter vorteilhaften Weise kompensiert werden kann. Durch diese Fertigungsrichtung kann insbesondere erreicht werden, dass der erste und der zweite Gewindeabschnitt beim Anziehen der Schnellspannmutter im Befestigungszustand gleichmäßig belastet werden.

Weitere Vorteile der Erfindung ergeben sich aus der Beschreibung und der Zeichnung. Die vorstehend genannten und die noch weiter ausgeführten Merkmale können erfindungsgemäß jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand eines Ausführungsbeispiels näher erläutert. Es zeigen:
- Fig. 1a: eine erfindungsgemäße Schnellspannmutter mit einem umlaufend geschlossenen Mutternkörper, an dem ein erster Gewindeabschnitt ausgebildet ist, der eine Gewindeachse definiert, und mit einem Mutterneinsatz, an dem ein zweiter Gewindeabschnitt ausgebildet ist und der in einer Kulisse des Mutterneinsatzes verschieblich geführt ist, wobei der Mutterneinsatz in einem Befestigungszustand der Schnellspannmutter zu der Gewindeachse hin eingerückt ist, in einer schematischen Querschnittsansicht;
- Fig. 1b: die Schnellspannmutter von Figur 1a in einem Verschiebezustand, in dem der Mutterneinsatz von der Gewindeachse weg ausgerückt ist, in einer schematischen Querschnittsansicht;
- Fig. 2a: die Schnellspannmutter von Figur 1a, wobei im Befestigungszustand Fortsätze des Mutterneinsatzes eine Schlüsselfläche mit ausbilden, in einer schematischen Perspektivansicht;
- Fig. 2b: die Schnellspannmutter im Verschiebezustand gemäß Figur 1b, wobei die Fortsätze über einen an dem Mutternkörper ausgebildeten Teil der Schlüsselfläche herausragen, in einer schematischen Perspektivansicht;
- Fig. 3: den Mutternkörper der Schnellspannmutter von Figur 1a, in einer schematischen Aufsicht;
- Fig. 4: den Mutternkörper von Figur 3, in einer schematischen Querschnittsansicht;
- Fig. 5: den Mutterneinsatz der Schnellspannmutter von Figur 1a, in einer schematischen Perspektivansicht mit Blick auf den zweiten Gewindeabschnitt;
- Fig. 6: den Mutterneinsatz von Figur 6, in einer schematischen Perspektivansicht mit Blick auf die Fortsätze;
- Fig. 7: ein schematisches Ablaufdiagramm eines erfindungsgemäßen Verfahrens zum Herstellen einer Schnellspannmutter, bei der eine Schlüsselfläche sowohl von der Mutterneinsatz als auch von dem Mutternkörper ausgebildet wird.

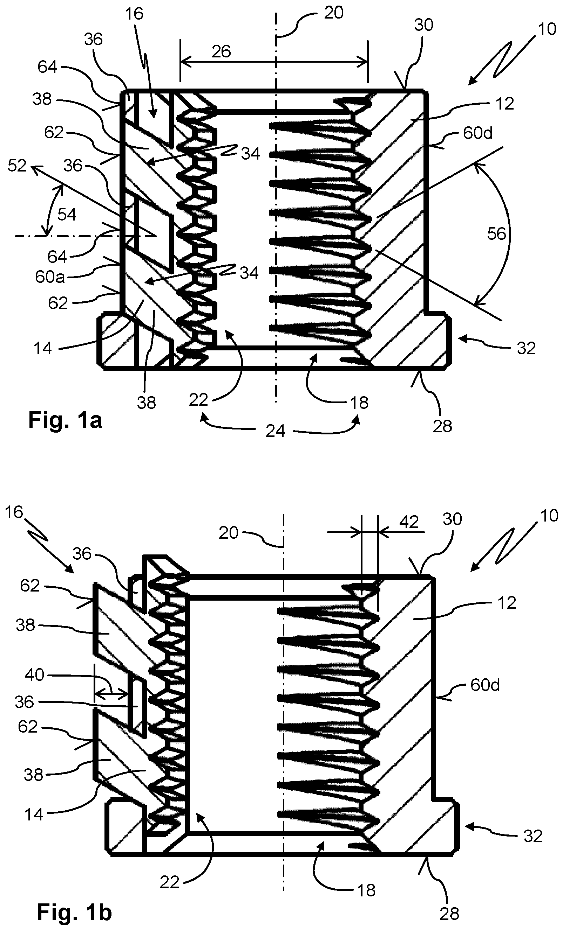

**Figur 1a** zeigt eine Schnellspannmutter **10.** Die Schnellspannmutter 10 weist einen Mutternkörper **12** und einen Mutterneinsatz **14** auf. Der Mutternkörper 12 und der Mutterneinsatz 16 können jeweils als ein Metallspritzgussteil aus einem Stahlwerkstoff ausgebildet sein. Der Mutterneinsatz 14 ist verschieblich in einer Kulisse **16** des Mutternkörpers 12 geführt. Der Mutternkörper 12 weist einen ersten Gewindeabschnitt **18** auf. Der erste Gewindeabschnitt 18 erstreckt sich entlang einer Gewindeachse **20.** Der Mutterneinsatz 14 weist einen zweiten Gewindeabschnitt **22** auf. In Figur 1a befindet sich die Schnellspannmutter 10 in einem Befestigungszustand. In dem Befestigungszustand ist der Mutterneinsatz 14 zu der Gewindeachse 20 hin vorgeschoben, sodass die beiden Gewindeabschnitte 18, 22 gemeinsam ein (in Umfangsrichtung unterbrochenes) Innengewinde **24** ausbilden. Das Innengewinde 24 besitzt einen Gewindenenndurchmesser **26.** Im dargestellten Befestigungszustand können die beiden Gewindeabschnitte 18, 22 der Schnellspannmutter 10 mit einem nicht dargestellten, korrespondierenden Außengewinde zusammenwirken.

Die beiden Gewindeabschnitte 18, 22 sind hier jeweils in axialer Richtung entlang der Gewindeachse 20 durchgehend ausgebildet. Insbesondere erstreckt sich der erste Gewindeabschnitt 18 von einer Anlagefläche **28** der Schnellspannmutter 10 durchgängig bis zu einer der Anlagefläche 28 abgewandten Stirnseite **30** der Schnellspannmutter 10. Die beiden Gewindeabschnitte 18, 22 können einander in radialer Richtung bezüglich der Gewindeachse 20 gegenüber liegen. Die Anlagefläche 28 erstreckt sich hier in einer senkrecht zu der Gewindeachse 20 ausgerichteten Ebene.

Der Mutternkörper 12 ist in Umfangsrichtung umlaufend geschlossen ausgebildet. Die Anlagefläche 28 ist hier an einem in radialer Richtung auskragenden Bund **32** ausgebildet. Der Bund 32 bildet einen geschlossen umlaufenden Axialabschnitt des Mutternkörpers 12.

Die Kulisse 16 weist hier zwei Kulissenöffnungen **34** auf. Die Kulissenöffnungen 34 sind entlang der Gewindeachse 20 übereinanderliegend angeordnet. Die Kulisse 16 weist ferner zwei Stege **36** auf. Mit den Stegen 36 ist jeweils ein weiterer geschlossen umlaufender Axialabschnitt des Mutternkörpers 12 gebildet. Die näher an der Anlagefläche 28 angeordnete Kulissenöffnung 34 ist durch den Bund 32 und den näher an der Anlagefläche 28 angeordneten Steg 36 in axialer Richtung begrenzt. Die näher an der Stirnseite 30 angeordnete Kulissenöffnung 34 ist in axialer Richtung durch die beiden Stege 36 begrenzt.

Der Mutterneinsatz 14 weist zwei Fortsätze **38** auf. Die Fortsätze 38 durchragen die Kulissenöffnungen 34. Im Befestigungszustand gemäß Figur 1a können die Fortsätze 38 radial außen bündig mit dem Mutternkörper 12 abschließen.

**Figur 1b** zeigt die Schnellspannmutter 10 in einem Verschiebezustand. In dem Verschiebezustand ist der Mutterneinsatz 14 gegenüber dem Befestigungszustand gemäß Figur 1a von der Gewindeachse 20 bzw. dem ersten Gewindeabschnitt 18 weg verschoben. Ein in radialer Richtung gemessener Verfahrweg **40** des Mutterneinsatzes 14 beträgt hier etwas mehr als das Doppelte einer Gewindetiefe **42** der Gewindeabschnitte 18, 22. Im Verschiebezustand der Schnellspannmutter 10 ist es daher möglich, die Schnellspannmutter 10 über das Außengewinde (nicht dargestellt) mit dem korrespondierenden Gewindenenndurchmesser 26 entlang der Gewindeachse 20 zu verschieben, ohne die Schnellspannmutter 10 um die Gewindeachse 20 zu drehen.

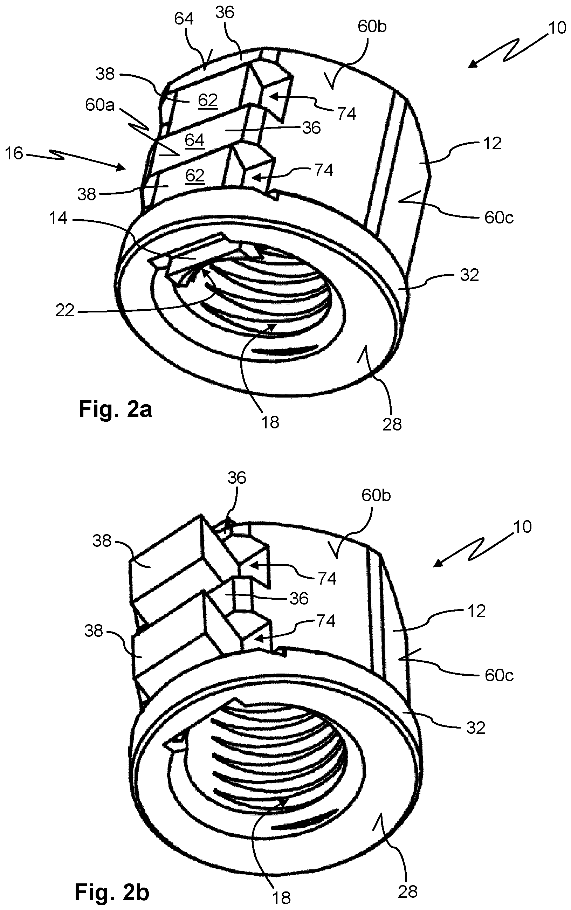

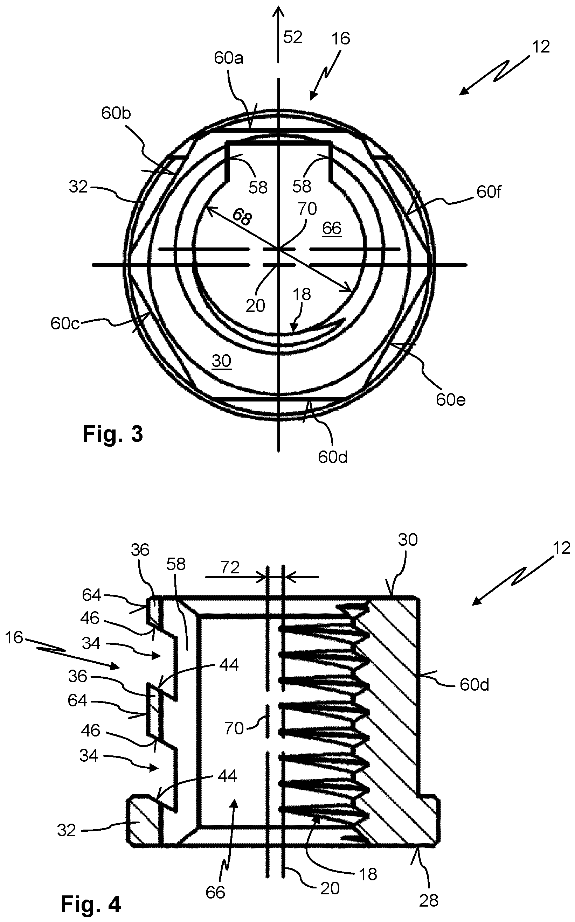

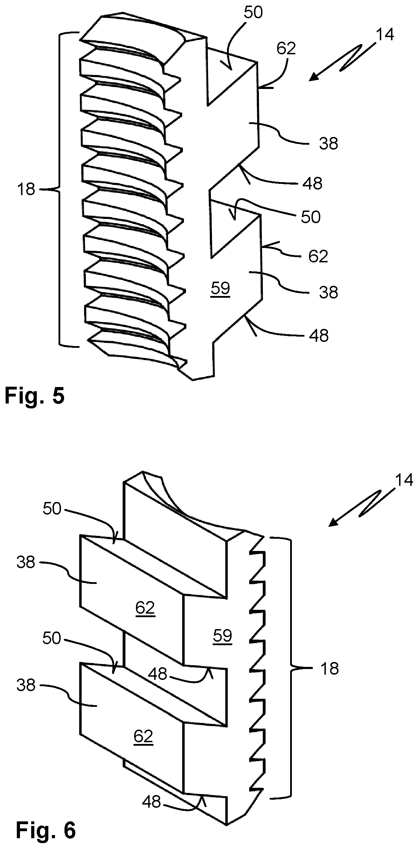

Im Folgenden wird ergänzend auf die **Figuren 2a** und **2b****,** welche die Schnellspannmutter 10 im Befestigungszustand bzw. Verschiebezustand in Perspektivansichten zeigen, die **Figuren 3** und **4****,** welche den Mutternkörper 12 in einer Aufsicht bzw. einer Querschnittsansicht zeigen, sowie die **Figuren 5** und **6** welche den Mutterneinsatz 14 in zwei unterschiedlichen Perspektivansicht zeigen, Bezug genommen.

Die Kulissenöffnungen 34 können zu der Anlagefläche 28 hin jeweils durch eine Führungsfläche **44** begrenzt sein, vgl. Figur 4. Zu der Stirnseite 30 hin können die Kulissenöffnungen 34 jeweils durch eine weitere Führungsfläche **46** begrenzt sein. An den Fortsätzen 38 des Mutterneinsatzes 14 können Gegenkonturen **48** und weitere Gegenkonturen **50** ausgebildet sein, vgl. Figuren 5 und 6. Beim Festziehen der Schnellspannmutter 10 im Befestigungszustand stützt sich der Mutterneinsatz 14 über die Gegenkonturen 48 an den Führungsflächen 44 des Mutternkörpers 12 ab. Die weiteren Führungsflächen 46 und die weiteren Gegenkonturen 50 dienen der Führung des Mutterneinsatzes 14 in axialer Richtung.

Die Kulisse 16 ist hier für eine geradlinige Führung des Mutterneinsatzes 14 relativ zu Mutternkörper 12 eingerichtet. Mit anderen Worten kann der Mutterneinsatz 14 in gerader Linie entlang einer Verschieberichtung **52** (vgl. Figuren 1a und 3) gegenüber dem Mutternkörper 12 in der Kulisse 16 verschoben werden.

Die Verschieberichtung 52 verläuft gegenüber einer senkrecht zu der Gewindeachse 20 ausgerichteten Ebene, hier beispielsweise der Anlagefläche 28, geneigt, vergleiche Figur 1a. Die Verschieberichtung 52 und die senkrecht zu der Gewindeachse 20 verlaufende Ebene schließen hier einen Führungswinkel **54** ein. Bei der dargestellten Ausführungsform der Schnellspannmutter 10 beträgt der Führungswinkel 54 beispielhaft 30°. Der Führungswinkel 54 ist so gewählt, dass beim Anziehen der Schnellspannmutter 10 bzw. im festgezogenen Zustand der Schnellspannmutter 10 eine von der Kulisse 16 des Mutternkörpers 12 auf den Mutterneinsatz 14 ausgeübte Kraft eine zu der Gewindeachse 20 hin wirkende Komponente aufweist. Die Führungsflächen 44, die weiteren Führungsflächen 46 sowie die Gegenkonturen 48 und die weiteren Gegenkonturen 50 sind entsprechend geneigt ausgerichtet.

Die Gewindeabschnitte 18, 22 können als Teile eines Spitzgewindes ausgebildet sein. Benachbarte Flanken der Gewindeabschnitte 18, 22 schließen hier jeweils einen Flankenwinkel **56** ein, vgl. Figur 1a. Der Flankenwinkel 56 kann doppelt so groß sein wie der Führungswinkel 54. Mit anderen Worten kann der Führungswinkel 54 der Hälfte des Betrags des Flankenweges 56 entsprechen. Bei der dargestellten Ausführungsform der Schnellspannmutter 10 beträgt der Flankenwinkel 56 beispielhaft 60°.

Die Verschieberichtung 52 kann in einer die Gewindeachse 20 enthaltenden Ebene verlaufen, vergleiche insbesondere Figur 3. Hier verläuft die Verschieberichtung 52 in einer senkrecht zu der Zeichenebene orientierten Ebene, in welcher auch die Gewindeachse 20 verläuft. Die Kulisse 16 kann hierfür Seitenflächen **58** aufweisen, welche parallel zur Verschieberichtung 52 bzw. der die Verschieberichtung 52 enthaltenden Ebene verlaufen, vgl. Figuren 3 und 4. Der Mutterneinsatz 14 kann entsprechend Außenflächen **59** aufweisen, welche parallel zur Verschieberichtung 52 bzw. der die Verschieberichtung 52 und die Gewindeachse 20 enthaltenden Ebene verlaufen, vgl. Figuren 5 und 6.

Zum Antrieb der Schnellspannmutter 10 kann der Mutternkörper 12 mit einem Außenmehrkant, insbesondere einem Außensechskant, ausgebildet sein. Der Mutternkörper 12 weist hier sechs Schlüsselflächen **60a, 60b, 60c, 60d, 60e, 60f** auf. Die Schlüsselfläche 60a wird im Befestigungszustand der Schnellspannmutter 10 sowohl von dem Mutternkörper 12 als auch von dem Mutterneinsatz 14 ausgebildet, vergleiche insbesondere Figuren 1a und 2a. Die Fortsätze 38 des Mutterneinsatzes 14 weisen hierzu jeweils eine Stirnfläche **62** auf. Im Befestigungszustand schließen die Stirnflächen 62 bündig mit Außenseiten **64** der Stege 36 ab.

Der Mutterkörper 12 kann eine Durchgangsbohrung **66** aufweisen, vgl. Figuren 3 und 4. Die Durchgangsbohrung 66 hat einen Durchmesser **68.** der Durchmesser 68 der Durchgangsbohrung 66 entspricht wenigstens dem Gewindenenndurchmesser 26 der Gewindeabschnitte 18, 22. Die Durchgangsbohrung 66 erlaubt mithin das Durchführen des Außengewindes (nicht dargestellt).

Eine Bohrungsachse **70** der Durchgangsbohrung 66 kann parallel zu der Gewindeachse 20 ausgerichtet sein. Hier ist die Bohrungsachse 70 von dem ersten Gewindeabschnitt 18 weg bzw. zu der Kulisse 16 hin gegenüber der Gewindeachse 20 versetzt angeordnet. Ein Versatz **72** zwischen der Bohrungsachse 70 und der Gewindeachse 20 kann der Gewindetiefe 42 entsprechen, vergleiche insbesondere Figuren 4 und 1b. Durch die Größe des Versatzes 72 und die Wahl des Durchmessers 68 der Durchgangsbohrung 66 kann die Umfangserstreckung des ersten Gewindeabschnitts 18 beeinflusst werden. Hier erstreckt sich der erste Gewindeabschnitt 18 in Umfangsrichtung über ca. 180°. Im in den Figuren dargestellten Ausführungsbespiel der Schnellspannmutter 10 erstreckt sich der zweite Gewindeabschnitt 22 über ca. 75°.

Um den Mutterneinsatz 14 unverlierbar an dem Mutternkörper 12 zu halten, können die Fortsätze 38 in nicht näher dargestellter Weise radial außen in Umfangsrichtung aufgeweitet sein. Die aufgeweiteten Abschnitte der Fortsätze 38 könnten sich beispielsweise in Freiräume **74** zwischen den Stegen 36 bzw. dem Bund 32 und dem benachbarten Steg 36, vergleiche Figuren 2a und 2b, hinein erstrecken. Nach dem Einsetzen des Mutterneinsatzes 14 in den Mutternkörper 12 können die Fortsätze 38 hierzu bereichsweise plastisch verformt worden sein. Die Aufweitungen der Fortsätze 38 gewährleisten dann, dass der Mutterneinsatz 14 nicht so weit zur Gewindeachse 20 hin verschoben werden kann, dass er außer Eingriff mit der Kulisse 16 gelangt.

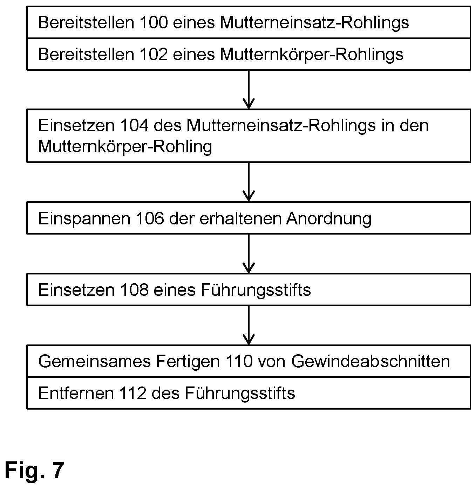

**Figur 7** zeigt ein schematisches Ablaufdiagramm eines Verfahrens zum Herstellen einer Schnellspannmutter 10, die eine von einem Mutterneinsatz 14 und einem Mutternkörper 12 gemeinsam ausgebildete Schlüsselfläche 60a aufweist. Das Verfahren wird beispielhaft für die oben beschriebene Schnellspannmutter 10 gemäß den Figuren 1a bis 6 dargestellt.

Zunächst werden in Schritten **100** und **102** ein Mutterneinsatz-Rohling sowie ein Mutternkörper-Rohling bereitgestellt. Der Mutternkörper-Rohling weist eine Durchgangsbohrung 66 auf. Der Mutternkörper-Rohling weist ferner eine Kulisse 16 zur Führung des Mutterneinsatz-Rohlings auf. Sodann wird in einem Schritt **104** der Mutterneinsatz-Rohling in den Mutternkörper-Rohling eingesetzt. Hierbei können Fortsätze 38 des Mutterneinsatz-Rohlings in Kulissenöffnungen 34 des Mutternkörper-Rohlings eingeführt werden.

Die erhaltene Anordnung von Mutternkörper-Rohling mit eingesetztem Mutterneinsatz-Rohling wird anschließend in einem Schritt **106** über eine gemeinsame Schlüsselfläche 60a des Mutternkörper-Rohlings und des Mutterneinsatz-Rohlings und eine gegenüberliegende Schlüsselfläche 60d eingespannt, beispielsweise in einem Schraubstock (nicht näher dargestellt). In einem Schritt **108** kann ein Führungsstift (nicht dargestellt) in die Durchgangsbohrung 66 eingesetzt werden. Der Führungsstift stellt sicher, dass sich der Mutterneinsatz-Rohling nicht nennenswert zu der Bohrungsachse 70 der Durchgangsbohrung 66 bzw. der Gewindeachse 20 des nachfolgend zu fertigenden Innengewindes 24 hin bewegen kann. Die Schritte 106 und 108 können prinzipiell in beliebiger Reihenfolge durchgeführt werden.

In einem Schritt **110** werden sodann die beiden Gewindeabschnitt 18, 22 gemeinsam gefertigt. Hierzu kann ein Gewindewerkzeug, beispielsweise ein Gewindebohrer, von einer Stirnseite 30, welche einer Anlagefläche 28 abgewandt ist, her in die Durchgangsbohrung 66 eingedreht werden. Hierbei ist sicherzustellen, dass das Gewindewerkzeug entlang der Gewindeachse 20 des zu fertigenden Innengewindes 24 angeordnet und vorgeschoben wird. Zumindest zu Beginn von Schritt 110 sichert der Führungsstift die Position des Mutterneinsatz-Rohlings bzw. Mutterneinsatzes 14. Vorzugsweise wird der Führungsstift mit fortschreitender Fertigung der Gewindeabschnitt 18, 22 in einem Schritt **112** zunehmend aus der Durchgangsbohrung 66 entfernt, beispielsweise von dem Gewindewerkzeug aus der Durchgangsbohrung 66 verdrängt.

### Bezugszeichenliste:

Schnellspannmutter **10**
Mutternkörper **12**
Mutterneinsatz **14**
Kulisse **16**
erster Gewindeabschnitt **18**
Gewindeachse **20**
zweiter Gewindeabschnitt **22**
Innengewinde **24**
Gewindenenndurchmesser **26**
Anlagefläche **28**
Stirnseite **30**
Bund **32**
Kulissenöffnungen **34**
Stege **36**
Fortsätze **38**
Verfahrweg **40**
Gewindetiefe **42**
Führungsfläche **44**
weitere Führungsfläche **46**
Gegenkontur **48**
weitere Gegenkontur **50**
Verschieberichtung **52**
Führungswinkel **54**
Flankenwinkel **56**
Seitenflächen **58**
Außenflächen **59**
Schlüsselflächen **60a - 60f**
Stirnfläche **62**
Außenseite **64**
Durchgangsbohrung **66**
Durchmesser **68**
Bohrungsachse **70**
Versatz **72**
Freiräume **74**
Bereitstellen **100** eines Mutterneinsatz-Rohlings
Bereitstellen **102** eines Mutternkörper-Rohlings
Einsetzen **104** des Mutterneinsatz-Rohlings in den Mutternkörper-Rohling
Einspannen **106** von Mutternkörper-Rohling und Mutterneinsatz-Rohling
Einsetzen **108** eines Wirkstifts
Gemeinsames Fertigen **110** der Gewindeabschnitte 18, 22
Entfernen **112** des Führungsstifts

## Patentansprüche

1. Schnellspannmutter (10)
mit einem sich entlang einer Gewindeachse (20) der Schnellspannmutter (10) erstreckenden ersten Gewindeabschnitt (18) und mit einem zweiten Gewindeabschnitt (22),
wobei der erste und der zweite Gewindeabschnitt (18, 22) in einem Befestigungszustand der Schnellspannmutter (10) in Eingriff mit einem sich entlang der Gewindeachse (20) erstreckenden Außengewinde bringbar sind und in einem Verschiebezustand der Schnellspannmutter (10) außer Eingriff mit dem Außengewinde bringbar sind, so dass die Schnellspannmutter (10) über das Außengewinde verschieblich ist,
wobei der erste Gewindeabschnitt (18) an einem in Umfangsrichtung umlaufend geschlossenen Mutternkörper (12) der Schnellspannmutter (10) ausgebildet ist,
wobei der zweite Gewindeabschnitt (22) an einem Mutterneinsatz (14) der Schnellspannmutter (10) ausgebildet ist, der in einer Kulisse (16) des Mutternkörpers (12) verschieblich geführt ist, und
wobei der Mutterneinsatz (14) entlang einer geradlinig verlaufenden Verschieberichtung (52) in der Kulisse (16) geführt ist,
**dadurch gekennzeichnet,**
**dass** die Verschieberichtung (52) gegenüber einer senkrecht zu der Gewindeachse (20) verlaufenden Ebene geneigt ausgerichtet ist.

2. Schnellspannmutter (10) nach Anspruch 1, **dadurch gekennzeichnet, dass** benachbarte Flanken der Gewindeabschnitte (18, 22) jeweils einen Flankenwinkel (56) einschließen, und dass die Verschieberichtung (52) mit der senkrecht zu der Gewindeachse (20) verlaufenden Ebene einen Führungswinkel (54) einschließt, der der Hälfte des Flankenwinkels (56) entspricht.

3. Schnellspannmutter (10) nach einem der vorhergehenden Ansprüche, **dadurch gekennzeichnet, dass** die Verschieberichtung (52) des Mutterneinsatzes (14) in einer die Gewindeachse (20) enthaltenden Ebene liegt.

4. Schnellspannmutter (10) nach einem der vorhergehenden Ansprüche, **dadurch gekennzeichnet, dass** der Mutternkörper (12) von wenigstens einer Kulissenöffnung (34) der Kulisse (16) durchbrochen ist, und dass der Mutterneinsatz (14) in die Kulissenöffnung (34) eingreift.

5. Schnellspannmutter (10) nach Anspruch 4, **dadurch gekennzeichnet, dass** der Mutterneinsatz (14) wenigstens einen Fortsatz (38) aufweist, der die Kulissenöffnung (34) im Mutternkörper (12) durchragt, vorzugsweise zwei Fortsätze (38) aufweist, die jeweils eine Kulissenöffnung (34) durchragen.

6. Schnellspannmutter (10) nach Anspruch 4 oder 5, **dadurch gekennzeichnet, dass** die Kulissenöffnung (34) zu einer Anlagefläche (28) der Schnellspannmutter (10) hin von einer parallel zu der Verschieberichtung (52) des Mutterneinsatzes (14) ausgerichteten Führungsfläche (44) begrenzt ist.

7. Schnellspannmutter (10) nach einem der vorhergehenden Ansprüche, **dadurch gekennzeichnet, dass** der Mutterneinsatz (14) im Befestigungszustand gemeinsam mit dem Mutternkörper (12) eine Schlüsselfläche (60a) der Schnellspannmutter (10) ausbildet.

8. Schnellspannmutter (10) nach einem der vorhergehenden Ansprüche, **dadurch gekennzeichnet, dass** ein in radialer Richtung zu der Gewindeachse (20) gemessener Verfahrweg (40) des Mutterneinsatzes (14) mehr als das Doppelte einer Gewindetiefe (42) der Gewindeabschnitte (18, 22) beträgt.

9. Schnellspannmutter (10) nach einem der vorhergehenden Ansprüche, **dadurch gekennzeichnet, dass** der Mutternkörper (12) eine parallel zur Gewindeachse (20) verlaufende Durchgangsbohrung (66) aufweist, deren Durchmesser (68) wenigstens dem Gewindenenndurchmesser (26) der Gewindeabschnitte (18, 22) entspricht und deren Bohrungsachse (70) gegenüber der Gewindeachse (20), vorzugsweise um den Betrag einer Gewindetiefe (42) des ersten Gewindeabschnitts (18), von dem ersten Gewindeabschnitt (18) weg angeordnet ist.

10. Schnellspannmutter (10) nach einem der vorhergehenden Ansprüche, **dadurch gekennzeichnet, dass** der erste und/oder der zweite Gewindeabschnitt (18, 22) entlang der Gewindeachse (20) über die Höhe des Mutternkörpers (12) bzw. des Muttereinsatzes (14) durchgehend ausgebildet sind.

11. Schnellspannmutter (10) nach einem der vorhergehenden Ansprüche, **dadurch gekennzeichnet, dass** der Mutterneinsatz (14) unverlierbar an dem Mutternkörper (12) gehalten ist.

12. Schnellspannmutter (10) nach einem der vorhergehenden Ansprüche, **dadurch gekennzeichnet, dass** der Mutternkörper (12) und/oder der Mutterneinsatz (14) als ein Metallspritzgussteil, insbesondere aus einem Stahlwerkstoff, ausgebildet sind.

13. Verfahren zum Herstellen einer Schnellspannmutter (10) nach Anspruch 7 mit den Schritten
a) Bereitstellen (100) eines Mutterneinsatz-Rohlings und Bereitstellen (102) eines Mutternkörper-Rohlings, der eine Durchgangsbohrung (66) und eine Kulisse (16) zur Führung des Mutterneinsatz-Rohlings aufweist,
b) Einsetzen (104) des Mutterneinsatz-Rohlings in die Kulisse (16) des Mutternkörper-Rohlings,
c) Einspannen (106) der erhaltenen Anordnung von Mutterneinsatz-Rohling und Mutternkörper-Rohling über eine von dem Mutterneinsatz-Rohling mit ausgebildete Schlüsselfläche (60a) und eine gegenüberliegende Schlüsselfläche (60d) an dem Mutternkörper-Rohling,
d) gemeinsames Fertigen (110) des ersten und des zweiten Gewindeabschnitts (18, 22).

14. Verfahrenen nach Anspruch 13, **dadurch gekennzeichnet, dass** im Schritt c) ein Führungsstift in die Durchgangsbohrung (66) eingesetzt wird (108), und dass im Schritt d) der Führungsstift (66) zumindest zu Beginn des gemeinsamen Fertigens (110) der Gewindeabschnitte (18, 22) die Position des Mutterneinsatzes (14) definiert, vorzugsweise wobei der Führungsstift mit dem Fortschritt des Fertigens der Gewindeabschnitte (18, 22) zunehmend aus der Durchgangsbohrung (66) entfernt wird (112).

15. Verfahren nach Anspruch 13 oder 14, **dadurch gekennzeichnet, dass** die Gewindeabschnitte (18, 22) durch Eindrehen eines Gewindewerkzeugs von einer einer Anlagefläche (28) der Schnellspannmutter (10) abgewandten Stirnseite (30) der Schnellspannmutter (10) her gefertigt werden.

## Claims

1. Quick-change nut (10)
comprising a first threaded portion (18) extending along a thread axis (20) of the quick-change nut (10) and comprising a second threaded portion (22),
the first and the second threaded portions (18, 22) being able to be brought into engagement with an external thread extending along the thread axis (20) in a fastening state of the quick-change nut (10) and being able to be brought out of engagement with the external thread in a displacement state of the quick-change nut (10) so that the quick-change nut (10) can be displaced over the external thread,
the first threaded portion (18) being formed on a nut body (12) of the quick-change nut (10) that is closed in a circumferential manner in the circumferential direction,
the second threaded portion (22) being formed on a nut insert (14) of the quick-change nut (10), which insert is guided into a slot (16) of the nut body (12) in a displaceable manner, and
the nut insert (14) being guided along a rectilinearly extending direction of displacement (52) in the slot (16),
**characterized in that**
the direction of displacement (52) is aligned such that it is inclined with respect to a plane running perpendicularly to the thread axis (20).

2. Quick-change nut (10) according to claim 1, **characterized in that** adjacent flanks of the threaded portions (18, 22) each enclose a flank angle (56), and **in that** the direction of displacement (52) encloses a guide angle (54) together with the plane running perpendicularly to the thread axis (20), which angle corresponds to half of the flank angle (56).

3. Quick-change nut (10) according to either of the preceding claims, **characterized in that** the direction of displacement (52) of the nut insert (14) lies in a plane containing the thread axis (20).

4. Quick-change nut (10) according to any of the preceding claims, **characterized in that** the nut body (12) is pierced by at least one slot opening (34) of the slot (16), and **in that** the nut insert (14) engages in the slot opening (34).

5. Quick-change nut (10) according to claim 4, **characterized in that** the nut insert (14) has at least one extension (38) which protrudes through the slot opening (34) in the nut body (12), and preferably has two extensions (38), each of which protrudes through a slot opening (34).

6. Quick-change nut (10) according to either claim 4 or claim 5, **characterized in that** the slot opening (34) is delimited towards a contact surface (28) of the quick-change nut (10) by a guide surface (44) which is aligned parallel to the direction of displacement (52) of the nut insert (14).

7. Quick-change nut (10) according to any of the preceding claims, **characterized in that** the nut insert (14) together with the nut body (12) forms a width flat (60a) of the quick-change nut (10) in the fastening state.

8. Quick-change nut (10) according to any of the preceding claims, **characterized in that** a travel path (40) of the nut insert (14) measured in the radial direction to the thread axis (20) amounts to more than double a thread depth (42) of the threaded portions (18, 22).

9. Quick-change nut (10) according to any of the preceding claims, **characterized in that** the nut body (12) has a through-hole (66) extending parallel to the thread axis (20), the diameter (68) of which through-hole corresponds to at least the nominal thread diameter (26) of the threaded portions (18, 22) and the hole axis (70) of which is arranged away from the first threaded portion (18) with respect to the thread axis (20), preferably by the amount of a thread depth (42) of the first threaded portion (18).

10. Quick-change nut (10) according to any of the preceding claims, **characterized in that** the first and/or the second threaded portion (18, 22) is designed so as to be continuous along the thread axis (20) over the height of the nut body (12) or the nut insert (14).

11. Quick-change nut (10) according to any of the preceding claims, **characterized in that** the nut insert (14) is held captively on the nut body (12).

12. Quick-change nut (10) according to any of the preceding claims, **characterized in that** the nut body (12) and/or the nut insert (14) are designed as a metal injection molded part, in particular made of a steel material.

13. Method for producing a quick-change nut (10) according to claim 7, comprising the steps of
a) providing (100) a nut insert blank and providing (102) a nut body blank which has a through-hole (66) and a slot (16) for guiding the nut insert blank,
b) inserting (104) the nut insert blank into the slot (16) of the nut body blank,
c) clamping (106) the resulting arrangement of the nut insert blank and the nut body blank over a width flat (60a) formed also by the nut insert blank and an opposing width flat (60d) on the nut body blank,
d) jointly manufacturing (110) the first and the second threaded portion (18, 22).

14. Method according to claim 13, **characterized in that** in step c) a guide pin is inserted (108) into the through-hole (66), and **in that** in step d) the guide pin (66), at least at the beginning of joint production (110) of the threaded portions (18, 22), defines the position of the nut insert (14), preferably the guide pin being increasingly removed (112) from the through-hole (66) as progress on the manufacturing of the threaded portions (18, 22) is made.

15. Method according to either claim 13 or claim 14, **characterized in that** the threaded portions (18, 22) are manufactured by screwing in a threading tool from an end face (30) of the quick-change nut (10) facing away from a contact surface (28) of the quick-change nut (10).

## Revendications

1. Ecrou (10) de serrage rapide
comprenant une première région filetée (18) s'étendant le long d'un axe (20) du filetage dudit écrou (10) de serrage rapide, et une seconde région filetée (22),
lesdites première et seconde régions filetées (18, 22) pouvant être mises en prise, dans un état fixé de l'écrou (10) de serrage rapide, avec un filetage extérieur s'étendant le long de l'axe (20) du filetage, et leur prise avec ledit filetage extérieur pouvant être supprimée dans un état déplacé dudit écrou (10) de serrage rapide, de sorte que ledit écrou (10) de serrage rapide peut être déplacé sous l'action dudit filetage extérieur,
sachant que la première région filetée (18) est façonnée sur un corps (12) de l'écrou (10) de serrage rapide, à pourtour fermé dans la direction périphérique,
sachant que la seconde région filetée (22) est façonnée sur une pièce (14) intégrée dans ledit écrou (10) de serrage rapide et guidée, avec mobilité, dans une partie de coulissement (16) dudit corps (12) de l'écrou, et
sachant que ladite pièce (14) intégrée dans l'écrou est guidée, dans ladite partie de coulissement (16), le long d'une direction de déplacement (52) s'étendant rectilignement,
**caractérisé par le fait**
**que** la direction de déplacement (52) est orientée avec inclinaison par rapport à un plan s'étendant perpendiculairement à l'axe (20) du filetage.

2. Ecrou (10) de serrage rapide selon la revendication 1, **caractérisé par le fait que** des flancs voisins, dans les régions filetées (18, 22), décrivent respectivement un angle (56) ; et **par le fait que** la direction de déplacement (52) décrit, avec le plan s'étendant perpendiculairement à l'axe (20) du filetage, un angle de guidage (54) qui correspond à la moitié dudit angle (56) des flancs.

3. Ecrou (10) de serrage rapide selon l'une des revendications précédentes, **caractérisé par le fait que** la direction (52) du déplacement de la pièce (14) intégrée dans ledit écrou est située dans un plan contenant l'axe (20) du filetage.

4. Ecrou (10) de serrage rapide selon l'une des revendications précédentes, **caractérisé par le fait que** le corps (12) dudit écrou est interrompu par au moins une ouverture (34) de la partie de coulissement (16) ; et **par le fait que** la pièce (14) intégrée dans ledit écrou pénètre dans ladite ouverture (34) de la partie de coulissement.

5. Ecrou (10) de serrage rapide selon la revendication 4, **caractérisé par le fait que** la pièce (14) intégrée dans ledit écrou est munie d'au moins un prolongement (38) traversant l'ouverture (34) de la partie de coulissement, dans le corps (12) dudit écrou, et est préférentiellement pourvue de deux prolongements (38) qui traversent, à chaque fois, une ouverture (34) de ladite partie de coulissement.

6. Ecrou (10) de serrage rapide selon la revendication 4 ou 5, **caractérisé par le fait que** l'ouverture (34) de la partie de coulissement est délimitée, vers une surface de contact (28) dudit écrou (10) de serrage rapide, par une surface de guidage (44) orientée parallèlement à la direction (52) du déplacement de la pièce (14) intégrée dans ledit écrou.

7. Ecrou (10) de serrage rapide selon l'une des revendications précédentes, **caractérisé par le fait que** la pièce (14) intégrée dans ledit écrou donne naissance à l'état fixé, conjointement au corps (12) dudit écrou, à une surface (60a) d'engagement d'une clé sur ledit écrou (10) de serrage rapide.

8. Ecrou (10) de serrage rapide selon l'une des revendications précédentes, **caractérisé par le fait qu'**une course (40) de déplacement de la pièce (14) intégrée dans ledit écrou, mesurée dans la direction radiale par rapport à l'axe (20) du filetage, représente plus du double d'une profondeur (42) du filetage des régions filetées (18, 22).

9. Ecrou (10) de serrage rapide selon l'une des revendications précédentes, **caractérisé par le fait que** le corps (12) dudit écrou comporte un alésage traversant (66) qui s'étend parallèlement à l'axe (20) du filetage, dont le diamètre (68) correspond au moins au diamètre nominal (26) du filetage des régions filetées (18, 22) et dont l'axe (70) est préférentiellement éloigné de la première région filetée (18), par rapport audit axe (20) du filetage, de la valeur d'une profondeur (42) du filetage de ladite première région filetée (18).

10. Ecrou (10) de serrage rapide selon l'une des revendications précédentes, **caractérisé par le fait que** les première et/ou seconde région(s) filetée(s) (18, 22) présente(nt) une réalisation ininterrompue, le long de l'axe (20) du filetage, sur la hauteur respective du corps (12) dudit écrou ou de la pièce (14) intégrée dans ledit écrou.

11. Ecrou (10) de serrage rapide selon l'une des revendications précédentes, **caractérisé par le fait que** la pièce (14) intégrée dans ledit écrou est retenue de manière imperdable sur le corps (12) dudit écrou.

12. Ecrou (10) de serrage rapide selon l'une des revendications précédentes, **caractérisé par le fait que** le corps (12) dudit écrou, et/ou la pièce (14) intégrée dans ledit écrou, se présente(nt) comme une pièce coulée par injection en un métal, notamment en un acier.

13. Procédé de fabrication d'un écrou (10) de serrage rapide conforme à la revendication 7,
comprenant les étapes consistant à
a) apprêter (100) une ébauche d'une pièce à intégrer dans l'écrou, et apprêter (102) une ébauche d'un corps dudit écrou, doté d'un alésage traversant (66) et d'une partie de coulissement (16) affectée au guidage de ladite ébauche de pièce à intégrer dans l'écrou,
b) introduire (104) ladite ébauche de pièce, à intégrer dans l'écrou, dans ladite partie de coulissement (16) de ladite ébauche de corps dudit écrou,
c) enserrer (106) l'ensemble ainsi obtenu, incluant une ébauche de pièce à intégrer dans l'écrou et une ébauche de corps dudit écrou, par l'intermédiaire d'une surface (60a) d'engagement d'une clé, formée conjointement par ladite ébauche de pièce à intégrer dans l'écrou, et d'une surface (60d) d'engagement d'une clé, tournée à l'opposé sur ladite ébauche de corps dudit écrou,
d) produire conjointement (110) les première et seconde régions filetées (18, 22).

14. Procédé selon la revendication 13, **caractérisé par le fait qu'**une tige de guidage est insérée (108) dans l'alésage traversant (66), à l'étape c) ; et **par le fait que** ladite tige de guidage définit l'emplacement de la pièce (14) intégrée dans l'écrou, à l'étape d), au moins au début de la production conjointe (110) des régions filetées (18, 22), sachant que, de préférence, ladite tige de guidage est graduellement enlevée (112) dudit alésage traversant (66) au fur et à mesure de la progression de la production desdites régions filetées (18, 22).

15. Procédé selon la revendication 13 ou 14, **caractérisé par le fait que** les régions filetées (18, 22) sont produites par vissage d'un outil fileté à partir d'une face extrême (30) de l'écrou (10) de serrage rapide qui est tournée à l'opposé d'une surface de contact (28) dudit écrou (10) de serrage rapide.
